# EUROPEAN PATENT APPLICATION

(11) **EP 2 706 732 A1**
(43) Date of publication of application: **12.03.2014**
(21) Application number: 13182952.5
(22) Date of filing: 04.09.2013
(51) Int. Cl.: H04L 29/08, G05B 19/418, H04L 29/06

(54) **Transformer substation automation system**

(30) Priority: 07.09.2012 JP 2012196975
(71) Applicant: Kabushiki Kaisha Toshiba, Minato-ku, Tokyo 105-8001 (JP)
(72) Inventor: Kaneda, Keiichi, Tokyo, 105-8001 (JP); Takubo, Yoshimitsu, Tokyo, 105-8001 (JP)
(74) Representative: Lind, Urban Arvid Oskar

(57) **Abstract**

An SC includes a determination database storing determination data. The SC includes a specific-event-occurrence detection unit that detects an occurrence of a transformer substation specific event, a data-compression-instruction output unit, a specific-event-recovery detection unit that detects an end of the specific event, and a data-compression-termination-instruction output unit. An MU and an IED each include a data compression flag setting unit and a data compression unit. The data compression flag setting unit sets a data compression flag to be ON when the MU and the IED receive a data compression instruction, and sets the data compression flag to be OFF when the MU and the IED receive a data compression termination instruction. The data compression unit starts a compression of received data when the data compression flag is ON and terminates the compression of the received data when the data compression flag is OFF.

## Description

### CROSS-REFERENCE TO RELATED APPLICATION(S)

This application is based upon and claims the benefit of priority from Japan Patent Application No. 2012-196975, filed on September 7, 2012, the entire contents of which are incorporated herein by reference.

### TECHNICAL FIELD

Embodiments described herein relate generally to a data transmission technology by a transformer substation automation system.

### BACKGROUND

In electric power systems, a transformation station plays important roles for supply, quality, and efficient operation of electric power. Accordingly, a transformer substation automation system which realizes monitoring control and automation of a transformer substation is getting a broad attention. Together with recent advancement of digital technology, a transformer substation automation system is becoming digitalized, and a configuration in which respective units included in the system are connected together through a network becomes general (see, for example, JP 2008-300942 A).

Such a transformer substation automation system is equipped with a control device which obtains data from respective portions of a transformer substation, and various data are exchanged via the network in the transformer substation. With respect to a data transmission standard through a network, the international standard IEC (International Electrotechnical Commission) 61850 is becoming popular. The control device which obtains data from respective portions of the transformer substation includes followings:
a) a merging unit which serves as an interface between each portion of the transformer substation and the system;
b) an intelligent terminal which exchanges data with the merging unit;
c) a station computer which exchanges data with the intelligent terminal and which functions as a core server of the system; and
d) a human-machine interface present between an operator and the system.
The station computer is also configured to exchange data with a remote control center which is a higher-order system.

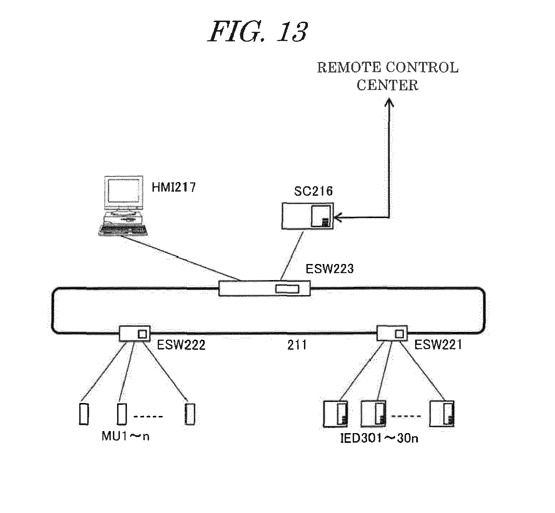

An example configuration of the transformer substation automation system will be explained with reference to an exemplary diagram of FIG. 13. As illustrated in FIG. 13, the transformer substation automation system is provided with a network 211 including a station bus. The network 211 is connected to the above-explained control devices via multiple (in this example, three) Ethernet switches 221 to 223.

That is, the first Ethernet switch 221 is connected with N number of intelligent electronic devices (hereinafter, referred to as IEDs) 301 to 30n. The second Ethernet switch 222 is connected with merging units (hereinafter, referred to as MUs) 1 to n. The third Ethernet switch 223 is connected with a station computer (hereinafter, referred to as an SC) 216 and a human-machine interface (hereinafter, referred to as an HMI) 217.

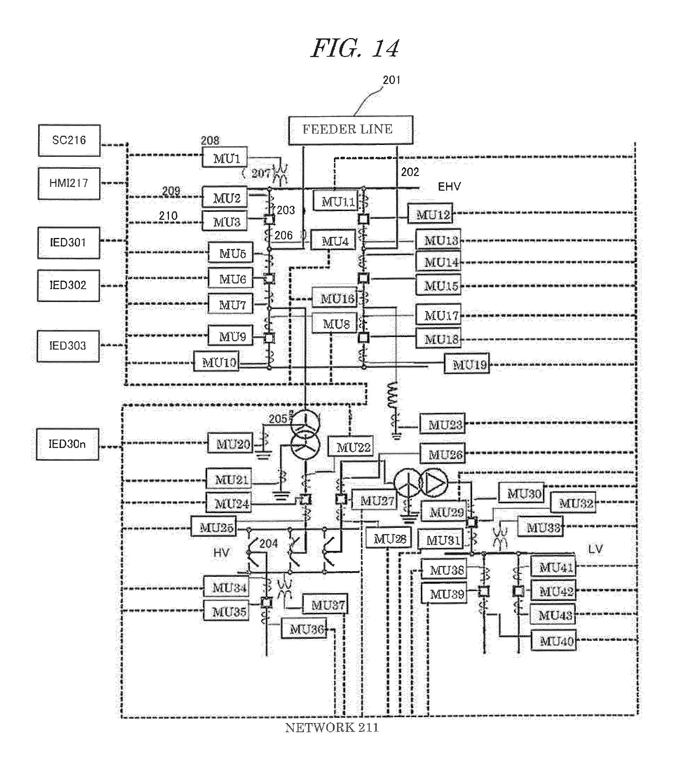

FIG. 14 illustrates an example configuration when a transformer substation automation system is applied to a transformer substation. In FIG. 14, as components of the transformer substation, a feeder line 201 and a bus 202, a circuit breaker 203, a disconnector 204, a transformer 205, an instrument current transformer 206, and an instrument voltage transformer 207 are provided. These devices and units are respective portions which obtain data from a transformer substation. The network 211 (illustrated in a dotted line) in the transformer substation automation system is laid over across the entire transformer substation. The MUs 1 to n which serve as an interface with the system are disposed near the respective above-explained components and connected with the IEDs 301 to 30n via the network 211.

The MUs 1 to n obtain various data from the components 201 to 207 of the transformer substation, digitalize such data so as to convert such data into serial data, and exchange data with the IEDs 301 to 30n. For example, the MU 1, the MU 2, and the MU 3 are connected to the instrument voltage transformer 207, the circuit breaker 203, and the instrument current transformer 206, respectively, thereby realizing the interface function.

The IEDs 301 to 30n include a data receiver and a data transmitter to exchange data with the MUs 1 to n and the SC 216 via the network 211. A specific example of the IEDs 301 to 30n is a protective relay which protects a protective circuit from sharp changes in current and voltage. The SC 216 also includes a data receiver and a data transmitter to exchange data with the IEDs 301 to 30n, and monitors and controls the condition of the entire transformer substation based on the data obtained from the IEDs 301 to 30n.

### SUMMARY

A transformer substation automation system is required to exchange data with the control devices without a delay via the network. In recent years, in accordance with the demands from users, the amount of data exchanged with the control devices is increasing. Accordingly, the transmission load on the network through which data is transmitted has a tendency to increase. Hence, increase of the transmission capability, i.e., the transmission capacity of network is desired.

As illustrated in FIG. 14, however, the network 211 in the transformer substation automation system is laid over across the entire transformer substation. Accordingly, in order to increase the transmission capacity of the network 211, it is necessary to spend a large amount of facility investment. As a result, an economic imposition is becoming large. Hence, for the transformer substation automation system, it is necessary to ensure a sufficient transmission capacity as well as a suppression of the costs of transmission facilities.

The transformer substation automation system according to the present disclosure has been proposed in order to address the above-explained disadvantages. An object of the present disclosure is to compress data quickly and flexibly corresponding to a transmission load on a network so as to reduce the amount of data transmitted over the network, ensure the transmission capacity and reduce the costs of transmission facilities, thereby improving the reliability and the economic performance of data transmission.

To accomplish the above object, an embodiment of the present disclosure provides a transformer substation automation system which couples, via a network, a plurality of control devices that obtain data from each portion of a transformer substation, and which causes the control devices to transmit the data to the network. The transformer substation automation system includes:
(1) a database stores determination data for determining whether or not a specific event occurs in the transformer substation;
(2) an event-occurrence detection unit that checks the data transmitted from the control devices via the network against the determination data stored in the database to detect an occurrence of the specific event;
(3) a first output unit that outputs a data compression instruction for starting a compression data to the whole transformer substation automation system via the network when the event-occurrence detection unit detects an occurrence of the occurrence of the specific event;
(4) a recovery detection unit that checks the data transmitted from the control devices via the network against the determination data stored in the determination database to detect the recovery from the inherent event;
(5) a second output unit that outputs a termination instruction for terminating the compression of data to the whole transformer substation automation system via the network when the recovery detection unit detects the recovery from the specific event; and
(6) a data compression unit which starts the compression of data when receiving the data compression instruction from the first output unit via the network, and which terminates the compression of data when receiving the termination instruction from the second output unit via the network.

### BRIEF DESCRIPTION OF THE DRAWINGS

FIG. 1 is an exemplary diagram illustrating a configuration according to a first embodiment;
FIG. 2 is an exemplary diagram illustrating a configuration of a major part in FIG. 1;
FIG. 3 is an exemplary diagram illustrating a configuration of a major part in FIG. 1;
FIG. 4A is an exemplary diagram and a graph illustrating an amount of data in a steady condition according to the first embodiment;
FIG. 4B is an exemplary diagram and a graph illustrating an amount of data at a time of an occurrence of a specific event according to the first embodiment;
FIG. 5 is a flowchart illustrating a determination process of a start and an end of data compression according to the first embodiment;
FIG. 6 is a flowchart illustrating a data transmitting process according to the first embodiment;
FIG. 7 is a flowchart illustrating a data receiving process according to the first embodiment;
FIG. 8 is an exemplary diagram illustrating how failure waveform data is exchanged according to a second embodiment;
FIG. 9 is a flowchart illustrating a data transmitting process according to the second embodiment;
FIG. 10 is a flowchart illustrating a data receiving process according to the second embodiment;
FIG. 11 is an exemplary diagram illustrating a configuration according to a third embodiment;
FIG. 12 is a flowchart illustrating a determination process of a start and an end of data compression according to another embodiment;
FIG. 13 is a diagram illustrating a configuration of a typical transformer substation automation system; and
FIG. 14 is a diagram illustrating a configuration in which a conventional transformer substation automation system is applied to a transformer substation.

### DETAILED DESCRIPTION

### [First Embodiment]

### (Configuration)

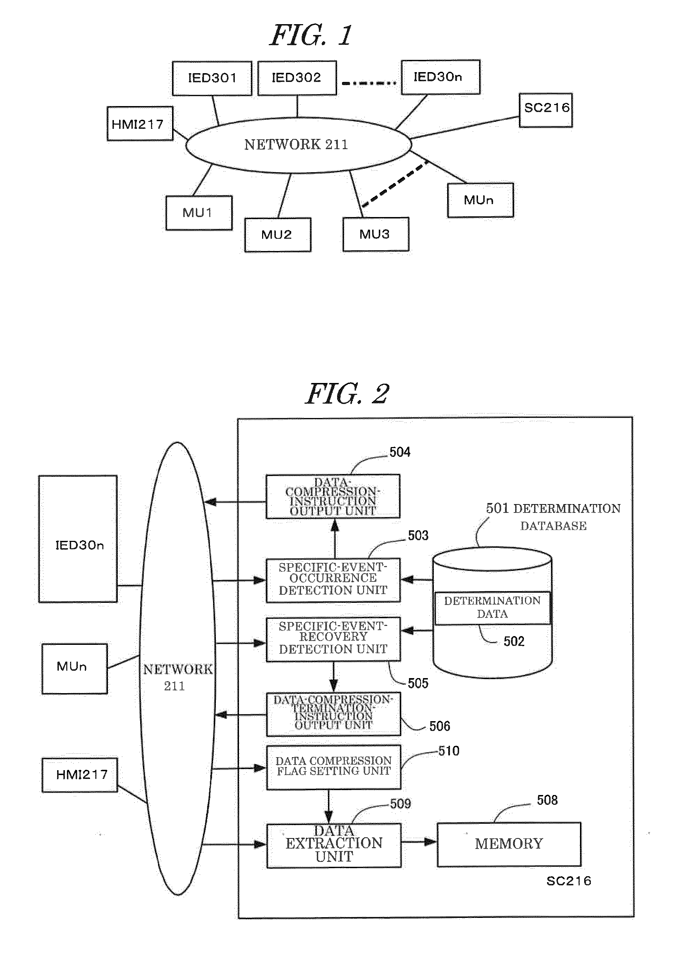

A first embodiment will be explained below in detail with reference to FIGS. 1 to 7. The same reference numerals denote the same components as those of the example conventional technology illustrated in FIGS. 13 and 14, and the explanation thereof will be omitted.

As illustrated in FIG. 1, the first embodiment relates to a transformer substation automation system which has control devices of four types, such as MUs 1 to n, IEDs 301 to 30n, an SC 216, and an HMI 217 connected together via a network 211. As illustrated in FIG. 2, the SC 216 is provided with a determination database 501. The determination database 501 stores determination data 502 for a determination on whether or not a specific event occurs in a transformer substation.

A condition in which a specific event occurs in a transformer substation means a condition different from a steady condition of the transformer substation. A typical specific event is a system failure. When the transformer substation returns to the steady condition from the condition in which the specific event has occurred, this means that the system failure has been recovered. Hence, the return from the condition in which the specific event has occurred to the steady condition is represented as "recovery from the specific event". The specific event and the steady condition will be explained in detail later.

### (Portions Detecting Occurrence of Specific Event and Outputting Compression Instruction)

As illustrated in FIG. 2, the SC 216 has a specific-event-occurrence detection unit (event-occurrence detection unit) 503 which detects an occurrence of a specific event in the transformer substation, and a data-compression-instruction output unit (first output unit) 504. The specific-event-occurrence detection unit 503 checks data transmitted from the MUs 1 to n and the IEDs 301 to 30n to the SC 216 via the network 211 against the determination data 502 stored in the determination database 501, and detects the occurrence of the specific event based on the check result.

That is, pieces of data transmitted from the MUs 1 to n and the IEDs 301 to 30n are information for determining the occurrence of the specific event. Pieces of data transmitted from the MUs 1 to n and the IEDs 301 to 30n are generally ON/OFF information detectable in a unit of millisecond. Hence, the occurrence of the specific event can be determined based on the ON/OFF information detectable in a unit of millisecond. When the specific-event-occurrence detection unit 503 detects an occurrence of the specific event, the data-compression-instruction output unit 504 outputs a data compression instruction for starting data compression to the whole system, i.e., not only the MUs 1 to n and the IEDs 301 to 30n, as well as the HMI 217, but also the SC 216 itself via the network 211.

### (Portions Detecting Recovery from Specific Event and Outputting Compression Termination Instruction)

The SC 216 has a specific-event-recovery detection unit (recovery detection unit) 505 which detects a recovery from a specific event, and a data-compression-termination-instruction output unit (second output unit) 506. The specific-event-recovery detection unit 505 between those checks data transmitted from the MUs 1 to n and the IEDs 301 to 30n to the SC 216 via the network 211 against the determination data 502 stored in the determination database 501, and detects the recovery from the specific event based on the check result.

That is, pieces of data transmitted from the MUs 1 to n and the IEDs 301 to 30n are information for determining the recovery from the specific event. As explained above, pieces of data transmitted from the MUs 1 to n and the IEDs 301 to 30n are generally ON/OFF information detectable in a unit of millisecond. Hence, the recovery from the specific event can be determined based on the ON/OFF information detectable in a unit of millisecond. When the specific-event-recovery detection unit 505 detects a recovery from the specific event, the data-compression-termination-instruction output unit 506 outputs a data compression termination instruction for terminating data compression to the whole system, i.e., like the former stage, in addition to the MUs 1 to n, the IEDs 301 to 30n, and the HMI 217, the local SC 216 via the network 211.

### (Portion Setting Data Compression Flag in SIC)

The SC 216 has a data compression flag setting unit 510 which receives the above-explained data compression instruction and the above-explained data compression termination instruction via the network 211. The data compression flag setting unit 510 sets a data compression flag to be ON when receiving a data compression instruction and sets a data compression flag to be OFF when receiving a data compression termination instruction.

### (Portion Extracting Data)

The SC 216 has a memory 508 that stores received data, and a data extraction unit 509 which extracts data when the received data is compressed. When the data compression flag setting unit 510 sets a data compression flag to be ON, the data extraction unit 509 starts an extracting process of the data received through the network 211. Conversely, when the data compression flag setting unit 510 sets a data compression flag to be OFF, the data extraction unit 509 terminates an extracting process of the data received through the network 211.

### (Portion Setting Data Compression Flag in MUs and IEDs)

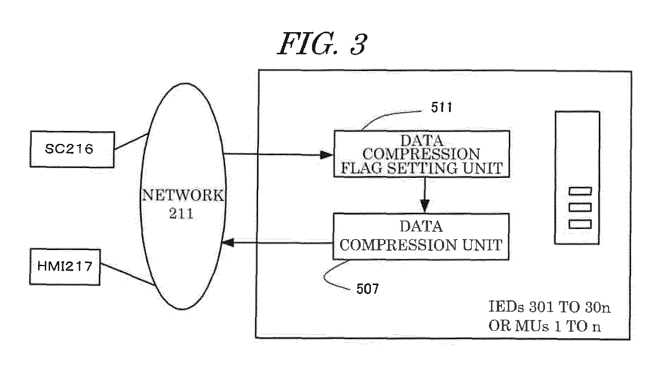

As illustrated in FIG. 3, the MUs 1 to n and the IEDs 301 to 30n each have a data compression flag setting unit 511. The data compression flag setting unit 511 receives the above-explained data compression instruction and the above-explained data compression termination instruction via the network 211. The data compression flag setting unit 511 sets a data compression flag to be ON when receiving a data compression instruction and sets a data compression flag to be OFF when receiving a data compression termination instruction.

### (Portion Compressing Data)

As illustrated in FIG. 3, the MUs 1 to n and the IEDs 301 to 30n each have a data compression unit 507 which executes a data compressing process. When the data compression flag setting unit 511 sets the data compression flag to be ON, the data compression unit 507 starts a compression of data transmitted over the network 211. Conversely, when the data compression flag setting unit 511 sets the data compression flag to be OFF, the data compression unit 507 terminates the compression of data transmitted over the network 211.

### (Specific Event and Steady Condition)

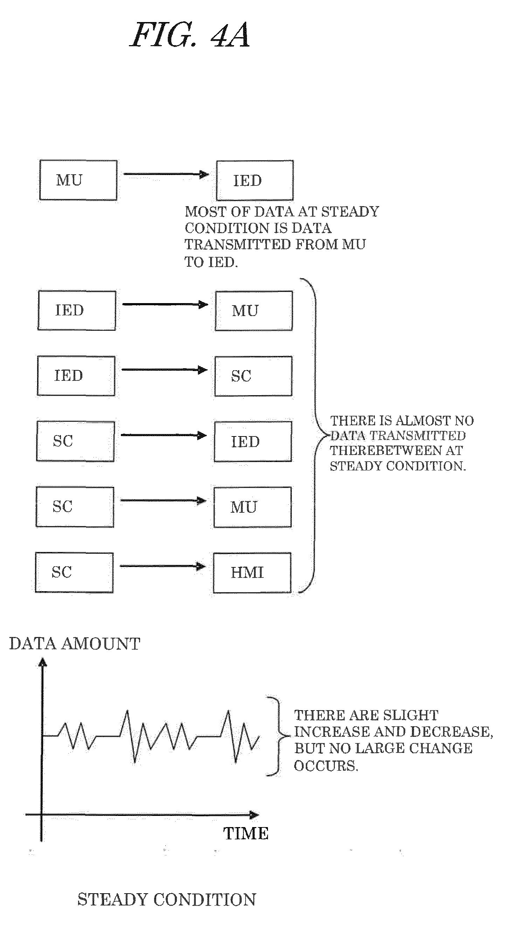

An explanation will be given of a specific event which occurs in a transformer substation and a steady condition prior to an occurrence of the specific event before each process according to this embodiment is explained. A steady condition is a condition in which the amount of data is maintained within a certain range although there are slight increase and decrease in the data amount together with the advancement of time. FIG. 4A illustrates an amount of data in a steady condition. In a steady condition, transmitted from the MUs 1 to n to the IEDs 301 to 30a are data such as measured data in an electric power system, operation data in transformer substation facilities, and system monitoring data for monitoring a condition of the transformer substation automation system. Amounts of such data are substantially constant. Moreover, in the steady condition, data from the IEDs 301 to 30n to the MUs 1 to n and the SC 216, or from the SC 216 to the IEDs 301 to 30n, the MUs 1 to n, and the HMI 217 are hardly transmitted. Hence, amounts of data transmitted over the network 211 in a steady condition are substantially constant and are a small amount.

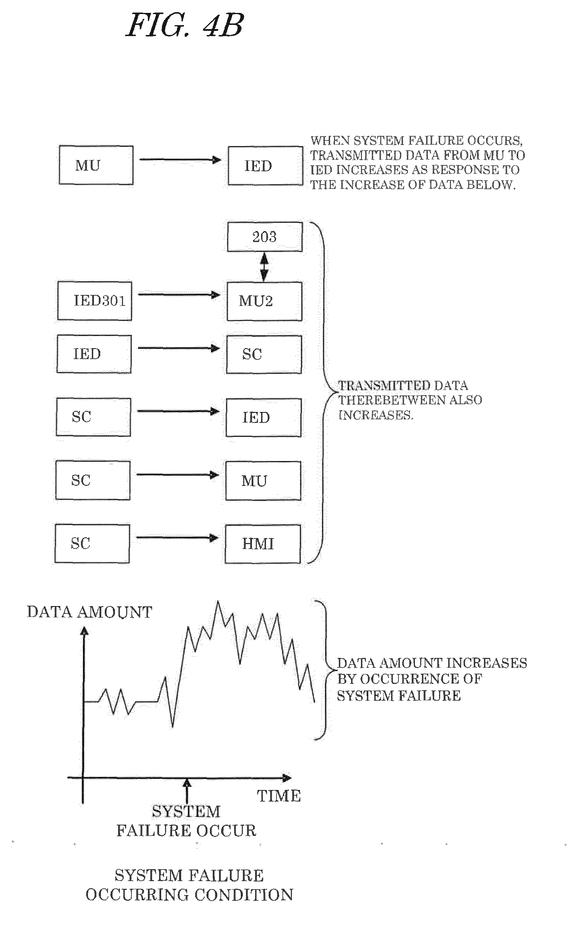

Conversely, when a system failure occurs as a specific event to the transformer substation, an amount of data transmitted over the network 211 becomes larger than that in a steady condition. That is, as illustrated in FIG. 4B, the IED 301 transmits an instruction for eliminating the system failure to the MU 2 in addition to the communication from the MUs 1 to n to the IEDs 301 to 30n. Accordingly, the MU 2 outputs a trip instruction to the circuit breaker 203. When the circuit breaker 203 having received the trip instruction from the MU 2 becomes a disconnect condition from a connect condition, the circuit breaker 203 transmits the data in the disconnect condition to the MU 2.

Moreover, the IEDs 301 to 30n transmit information on the system failure to the SC 216. The SC 216 further transmits the system failure information to the HMI 217, and the HMI 217 displays the information on the system failure to an operator. Hence, when the system failure occurs, a graph with respect to the amount of data flowing through the network 211 and a time comes to have a different trend from that of the graph in the normal condition. Moreover, the amount of data temporally increases over the range of the steady condition. When the transformer substation is recovered from the specific event, the amount of data transmitted over the network 211 returns to that of the steady condition before the specific event has occurred.

As for examples of specific events of the transformer substation other than the system failure, there are an operation instruction to respective devices disposed in the transformer substation and an activation of a system. When those specific events occur, the amount of data transmitted over the network 211 becomes larger than that in the steady condition although the amount of data transmitted differs depending on the kind of the specific event. Also, when the transformer substation is recovered from the specific event, the amount of data transmitted over the network 211 decreases to the amount of data in the steady condition.

The amount of transmitted data becomes different depending on various conditions, such as a scale of the transformer substation, a kind of the specific event, and the setting of an initialization time. For example, among the above-explained specific events, it is typical that the amount of transmitted data when the system is activated is largest, the amount of transmitted data when a system failure occurs is second largest, and the amount of transmitted data when the operation instruction is output is smallest. Regarding the amount of data transmitted when the system is activated, however, the data transmission load can be suppressed by setting the initialization time longer.

### (Determination Process of Start and End of Data Compression)

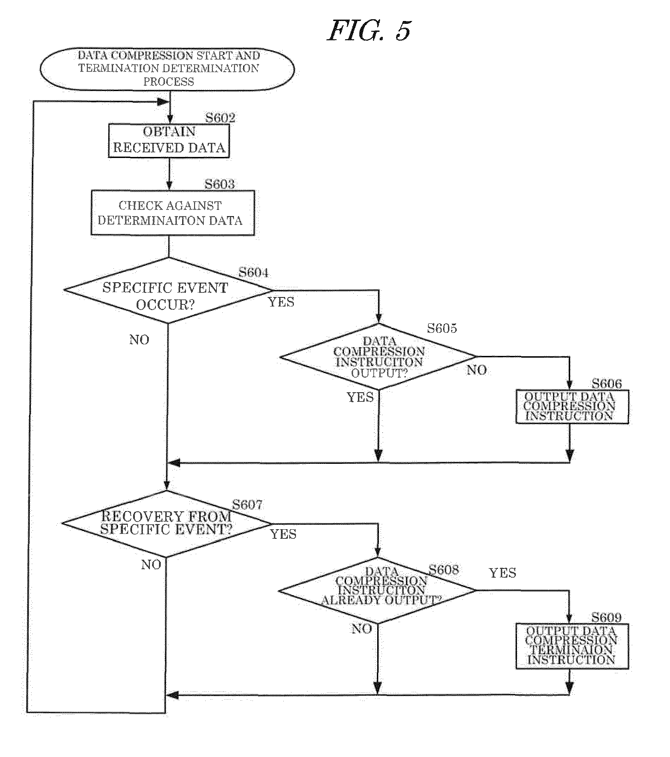

With reference to a flowchart of FIG. 5, an explanation will be given of a determination process of a start and a termination of data compression based on the presence/absence of a specific event. Although "START" and "END" of the process are not illustrated in the flowchart, each process starts when the transformer substation automation system is activated and ends when the transformer substation automation system is deactivated. The same is applied to the flowcharts other than FIG. 5. As illustrated in FIG. 5, in the determination process of the start and the termination of data compression, first, the specific-event-occurrence detection unit 503 in the SC 216 receives data transmitted from the MUs 1 to n and the IEDs 301 to 30n via the network 211 (step S602).

The specific-event-occurrence detection unit 503 checks the received data against the determination data 502 stored in the determination database 501 (step S603), and determines the presence/absence of specific event data based on whether or not there is data which should be determined as a specific event in the received data (step S604). When determining that the specific event data is not present (step S604: NO), the specific-event-occurrence detection unit 503 progresses the process to step S607.

When determining that the specific event data is present (step S604: YES), it is confirmed whether or not the data-compression-instruction output unit 504 has already output the data compression instruction (step 5605). When the data-compression-instruction output unit 504 has already output the data compression instruction (step S605: YES), a setting is made in such a way that the data-compression-instruction output unit 504 will not redundantly output the data compression instruction and the process progresses to the step S607. When the data-compression-instruction output unit 504 has not yet output the data compression instruction (step S605: NO), the data-compression-instruction output unit 504 outputs the data compression instruction over the network 211 (step S606), and the process progresses to the step S607.

In the step S607, the specific-event-recovery detection unit 505 checks the received data against the determination data 502 stored in the determination database 501, and determines whether or not the transformer substation has been recovered from the specific event. When determining that the transformer substation has not been recovered from the specific event (step S607:NO), the process returns to the step S602. Conversely, when determining that the transformer substation has been recovered from the specific event (step S607: YES), it is confirmed whether or not the data-compression-instruction output unit 504 has already output the data compression instruction (step S608).

Moreover, when the data-compression-instruction output unit 504 has not yet output the data compression instruction (step S608: NO), the process returns to the received data obtaining step (step S602) without outputting data compression termination instruction. Hence, when no data compression instruction has been output, a setting is made in such a way that the data compression termination instruction will not be output. Conversely, when the data-compression-instruction output unit 504 has already output the data compression instruction (step S608: YES), the data-compression-termination-instruction output unit 506 outputs the data compression termination instruction (step S609). Thereafter, the process returns to the received data obtaining step (step S602).

### (Data Transmitting Process)

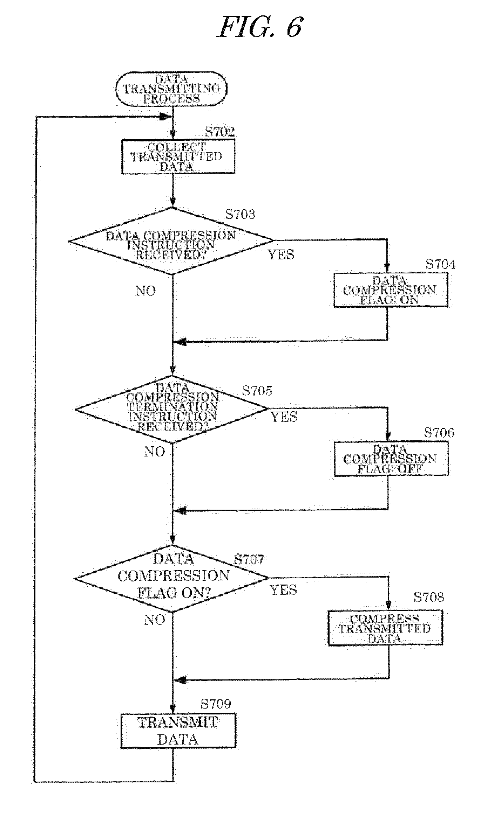

With reference to a flowchart of FIG. 6, an explanation will be given of a data transmitting process in the MUs 1 to n and the IEDs 301 to 30n. As illustrated in FIG. 6, the MUs 1 to n and the IEDs 301 to 30n collect data to be transmitted via various applications installed thereon (step S702). Subsequently, it is determined whether or not the MUs 1 to n and the IEDs 301 to 30n have received the data compression instruction through the network 211, and confirmed the presence/absence of a data compression instruction (step S703). When the MUs 1 to n and the IEDs 301 to 30n have not received the data compression instruction through the network 211 (step S703: NO), the process progresses to step S705.

When the MUs 1 to n and the IEDs 301 to 30n have received the data compression instruction through the network 211 (step S703: YES), the data compression flag setting unit 511 sets the data compression flag to be ON (step S704). Subsequently, it is determined whether or not the MUs 1 to n and the IEDs 301 to 30n have received the data compression termination instruction through the network 211, and confirmed the presence/absence of a data compression termination instruction (step S705).

When the MUs 1 to n and the IEDs 301 to 30n have not received the data compression termination instruction (step S705: NO), the process progresses to step S707. Conversely, when the MUs 1 to n and the IEDs 301 to 30n have already received the data compression termination instruction (step S705: YES), the data compression flag setting unit 511 sets the data compression flag to be OFF (step S706).

In the step S707, it is determined whether or not the data compression flag setting unit 511 sets the data compression flag to be ON. When the data compression flag setting unit 511 does not set the data compression flag to be ON, that is, the data compression flag is set to be OFF (step S707: NO), the MUs 1 to n and the IEDs 301 to 30n directly transmit the data over the network 211 without a data compression (step S709). Conversely, when the data compression'flag setting unit 511 sets the data compression flag to be ON (step S707: YES), the data compression unit 507 compresses the data to be transmitted (step S708), and the MUs 1 to n and the IEDs 301 to 30n transmit the compressed data over the network 211 (step S709).

As explained above, according to this embodiment, the start determination process and the termination determination process on data compression at the MUs 1 to n and the IEDs 301 to 30n are executed in series. Hence, there is no time difference in the timing of data compression and the timing of compression termination among the MUs 1 to n and the IEDs 301 to 30n. Moreover, data can be exchanged without adding data indicating a compression to the original data to be exchanged. Hence, the amount of transmitted data can be reduced.

### (Data Receiving Process)

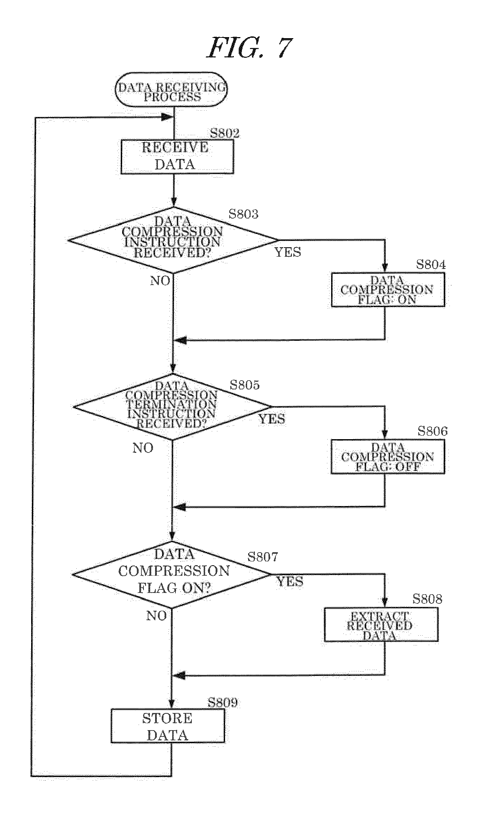

FIG. 7 illustrates a flowchart of a data receiving process in the SC 216 which receives data. As illustrated in FIG. 7, the SC 216 receives data through the network 211 (step S802). Next, it is determined whether or not the SC 216 has received the data compression instruction through the network 211 and confirmed the presence/absence of a data compression instruction (step S803). When the SC 216 has not received a data compression instruction (step S803: NO), the process progresses to step S805. When the SC 216 has received the data compression instruction (step S803: YES), the data compression flag setting unit 510 in the SC 216 sets the data compression flag to be ON (step S804).

Next, it is determined whether or not the SC 216 has received the data compression termination instruction through the network 211 and confirmed the presence/absence of a data compression termination instruction (step S805). When the SC 216 has not received a data compression termination instruction (step S805: NO), the process progresses to step S807. When the SC 216 has received the data compression termination instruction (step S805: YES), the data compression flag setting unit 510 in the SC 216'sets the data compression flag to be OFF.

In the step S807, it is determined whether or not the data compression flag setting unit 510 sets the data compression flag to be ON. When the data compression flag setting unit 510 does not set the data compression flag to be ON, that is, the data compression flag is set to be OFF (step S807: NO), the SC 216 does not extract the received data but directly stores such data in the memory 508 in the SC 216 (step S809). Conversely, when the data compression flag setting unit 510 sets the data compression flag to be ON, the data extraction unit 509 extracts the received data and stores the extracted data in the memory 508. The SC 216 executes various processes based on the data stored in the memory 508, and the HMI 217 displays the process results.

As explained above, the start determination process and the termination determination process on data compression are also executed in series in the SC 216. Hence, there is no time difference in the timing of data compression and the timing of compression timing between the MUs 1 to n and the IEDs 301 to 30n, and, the SC 216. Moreover, the data compression and extraction need respective process times. According to this embodiment, however, by adding time information to the original data itself, it becomes possible to determine when the data was processed.

### (Advantageous Effects)

According to the above-explained first embodiment, the specific-event-occurrence detection unit 503 of the SC 216 detects that a specific event occurs in the transformer substation. At this time, the detection of the occurrence of the specific event is determined based on the data transmitted from the MUs 1 to n and the IEDs 301 and 30n, and ON/OFF information. Such pieces of data are detectable in a unit of millisecond.

Accordingly, it generally takes substantially 10 to 100 milliseconds until the data-compression-instruction output unit 504 outputs a data compression instruction after the specific-event-occurrence detection unit 503 has received the above-explained transmitted data. That is, a time necessary for starting the data compression from the occurrence of the specific event, i.e., a response time to the detection of the occurrence of a high load condition in the network 211 is substantially 10 to 100 milliseconds.

According to the conventional technology, an occurrence of a high load condition is detected based on measured results of the amount of data flowing through the network 211. In this case, although the amount of data flowing through the network 211 is measured at a cycle of substantially 50 milliseconds, it is necessary to take into consideration the fact that a change in the amount of data flowing through the network 211 is instantaneous. Hence, the amount of data flowing through the network 211 must be measured multiple times, more specifically, 10 to 20 times and then the load condition in the network 211 is determined.

Hence, in this conventional technology, in order to obtain a determination result whether or not the network 211 is in a high load condition, a cycle of 50 milliseconds is repeated by 10 to 20 times, that is, a total of 500 to 1000 milliseconds is required. That is, when it is attempted to detect an occurrence of a high load condition in the network 211 based on the measured results of the amount of data flowing through the network 211, the response time takes 500 to 1000 milliseconds.

As explained above, the response time until an occurrence of a high load condition in the network 211 is detected takes substantially 500 to 1000 milliseconds according to the conventional technology based on the measured results of the data amounts. Conversely, according to the first embodiment based on the presence/absence of an occurrence of a specific event, the response time takes substantially 10 to 100 milliseconds, and the response is quite excellent. That is, according to the first embodiment, it becomes possible that the data-compression-instruction output unit 504 outputs a data compression instruction over the whole system before the amount of data transmitted over the network 211 increases and the transmission load on the network 211 becomes high, and thus the data compression unit 507 can quickly and surely start a data compression. Hence, it is unnecessary to set the transmission capacity of the network 211 to be high and to spend a large amount of investments for transmission facilities, thereby improving the economic performance.

Moreover, when the specific-event-recovery detection unit 505 of the SC 216 detects a recovery from the specific event which has occurred in the transformer substation, the data-compression-termination-instruction output unit 506 outputs a data compression termination instruction over the whole system. Accordingly, when the amount of data to be transmitted over the network 211 returns to that of the steady condition, the data compression unit 507 can immediately terminate the data compression. Hence, the load in the MUs 1 to n and the IEDs 301 to 30n do not unnecessarily increase, and the load of data processing can be reduced.

The above-explained transformer substation automation system according to the first embodiment performs the data compression only when the transmission load on the network increases, and terminating the data compression when the transmission load becomes little, thereby suppressing an increase of the costs due to the increase of the transmission capacity of the network 211. Accordingly, the transmission capacity of the network 211 can be optimized and a stable data transmission can be realized. This results in the improvement of the economic performance and the reliability of data transmission.

### [Second Embodiment]

### (Configuration)

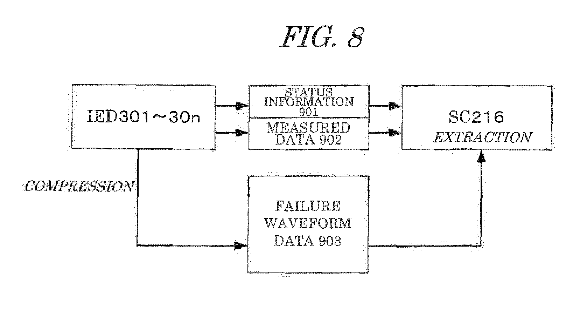

With reference to FIGS. 8 to 10, a second embodiment will be explained in detail. The same components as those of the first embodiment will be denoted by the same reference numerals, and the explanation thereof will be omitted. As illustrated in FIG. 8, in the second embodiment, the data compression units 507 of the MUs 1 to n and the IEDs 301 to 30n compress data when the data to be transmitted is failure waveform data 903. Moreover, the data extraction unit 509 of the SC 216 extracts the received data when such data is the failure waveform data 903. The failure waveform data 903 is alternating waveform data indicating a system current and a system voltage at the time of a system failure.

Various data are transmitted to the SC 216 from the IEDs 301 to 30n via the network 211. As illustrated in FIG. 8, the examples of such data are, in addition to the failure waveform data 903, status information 901 indicating the statuses of respective components of the transformer substation, and various measured data 902 obtained by measuring an energy flowing through an electric power system. Among such data, the failure waveform data 903 has a large size, and is generated and transmitted when a specific event occurs in the transformer substation, that is, at the time of the occurrence of the system failure. The failure wave form data becomes a cause that extremely increases the transmission load on the network 211.

Hence, according to the MUs 1 to n and the IEDs 301 to 30n of the second embodiment, when the data to be transmitted is the failure waveform data 903, the data compression unit 507 compresses the data before transmitting such data over the network 211. When the data to be transmitted is not the failure waveform data 903, the data is transmitted over the network 211 without being compressed. In the SC 216, when the received data is the failure waveform data 903, the data extraction unit 509 extracts the data before storing the data in the memory 508. When the received data is not the failure waveform data 903, the data is directly stored in the memory 508 of the SC 216 without extracting the data.

### (Data Transmitting Process)

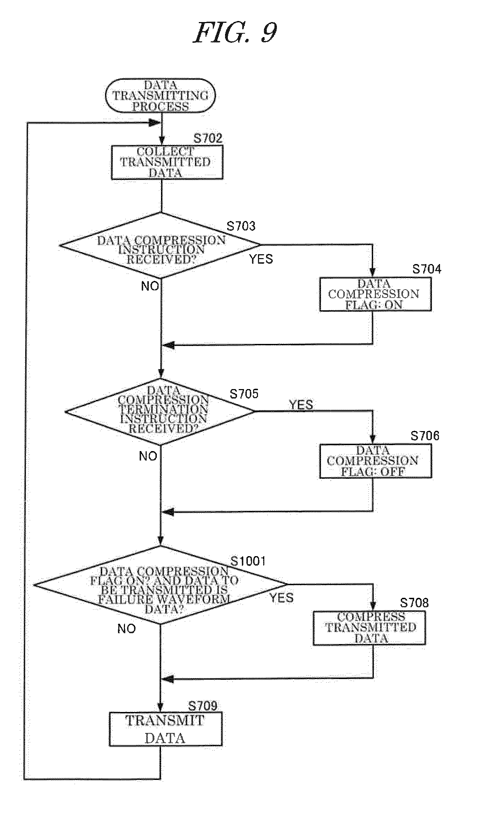

According to the first embodiment, as indicated in the flowchart of FIG. 6, in a data transmitting process, it is determined whether or not the compression flag is set to be ON (step S707). In contrast, according to the above-explained second embodiment, as indicated in the flowchart of FIG. 9, , a process (step S1001) determining the kind of data to be transmitted in the MUs 1 to n and IEDs 301 to 30n so as to compress only the failure waveform data 903 is added instead of step S707. That is, when determining that the data compression flag setting unit 511 sets the data compression flag to be ON and the data to be transmitted is the failure waveform data 903 (step S1001: YES), the MUs 1 to n and the IEDs 301 to 30n compress the data (step S708), and transmit the compressed data to the network 211(step S709).

### (Data Receiving Process)

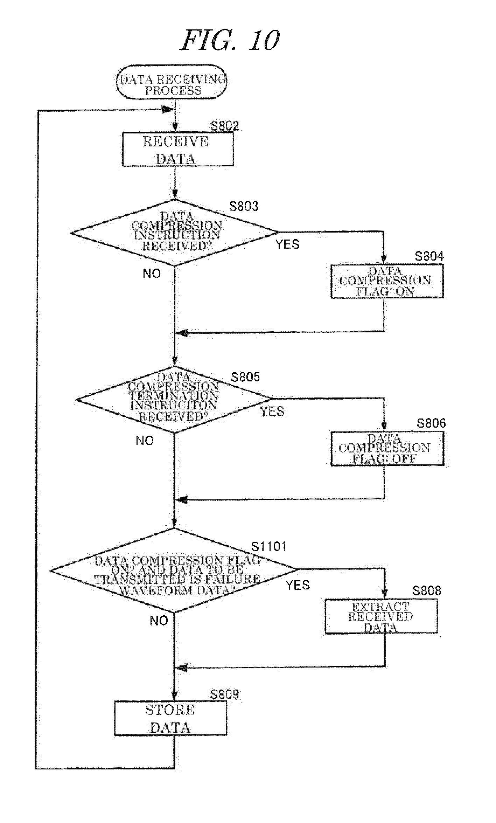

According to the first embodiment, as indicated in the flowchart of FIG. 7, in a data receiving process, it is determined whether or not the compression flag is set to be ON (step S807). In contrast, according to the second embodiment, as indicated in the flowchart of FIG. 10, a process (step S1101) determining the kind of received data in the SC 216 so as to extract only the failure waveform data 903 is added instead of step S807. That is, when determining that the data compression flag setting unit 510 sets the data compression flag to be ON and the received data is the failure waveform data 903 (step S1101: YES), the SC 216 extracts the data (step S808), and stores the extracted data in the memory (step S809).

### (Advantageous Effects)

According to the second embodiment, in addition to the advantageous effects of the above-explained first embodiment, only the failure waveform data 903, which is a cause of increasing the transmission load, is selectively compressed and extracted. Hence, it is possible to effectively reduce the load of the compressing process by the MUs 1 to n and the IEDs 301 to 30n and the load of the compressed-data extracting process by the SC 216, thereby efficiently realizing the compressing and extracting processes of transmitted data.

### [Third Embodiment]

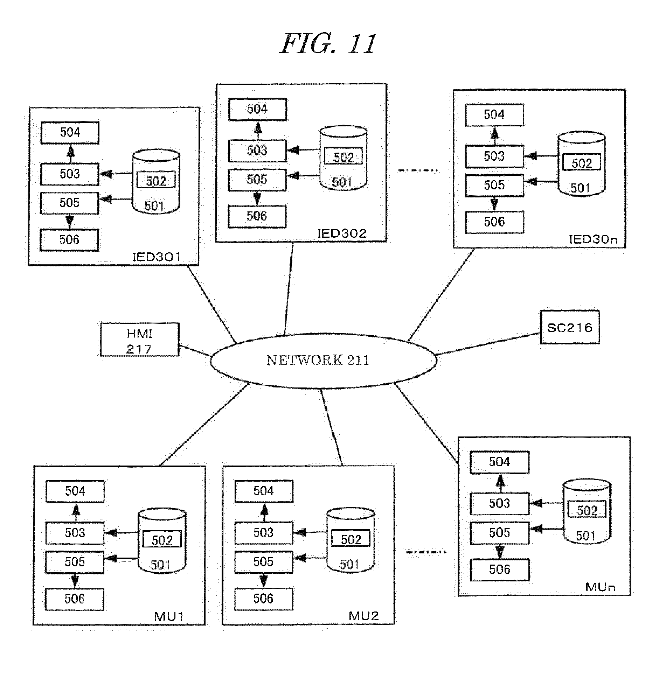

As illustrated in FIG. 11, according to the third embodiment, each of the MUs 1 to n and IEDs 301 to 30n, instead of the SC 216, includes the determination database 501, the specific-event-occurrence detection unit 503, the data-compression-instruction output unit 504, the specific-event-recovery detection unit 505, and the data-compression-termination-instruction output unit 506.

### (Advantageous Effect)

According to such a third embodiment, data transmitted by the MUs 1 to n and the IEDs 301 to 30n over the network 211 is received by the specific-event-occurrence detection unit 503 of the MUs 1 to n and IEDs 301 to 30n, enabling the respective MUs 1 to n and IEDs 301 to 30n to check the local internal information. Hence, in comparison with a case in which the specific-event-occurrence detection unit 503 is placed in the SC 216 and the SC 216 determines the occurrence of a specific event, the occurrence of a specific event can be determined faster.

Moreover, when any trouble occurs in the SC 216 and a determination cannot be carried out normally, the data-compression-instruction output unit 504 and data-compression-termination-instruction output unit 506 of the MUs 1 to n and IEDs 301 to 30n can output the data compression instruction and the data compression termination instruction over the network 211. This further enhances the data transmission reliability.

### [Other Embodiments]

While certain embodiments have been described, these embodiments have been presented by way of example only, and are not intended to limit the scope of the inventions. Indeed, the novel methods and apparatuses described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

For example, the amount of transmitted data flowing through the network may be calculated in advance, and the threshold for the amount of transmitted data may be adjusted in accordance with the kind of the transformer substation specific event. According to such an embodiment, the determination criteria of the start and termination of the data compression can be changed in accordance with the kind of the transformer substation specific event, the period of compressing and transmitting data can be optimized. Hence, the load on each control device can be further reduced. Meanwhile, as described above, the reference amount of transmitted data differs in accordance with not only according to the kind of the specific event but also according to the scale of the transformer substation and the setting for the initialization time, etc. , and thus such a reference amount can be changed appropriately based on multiple conditions.

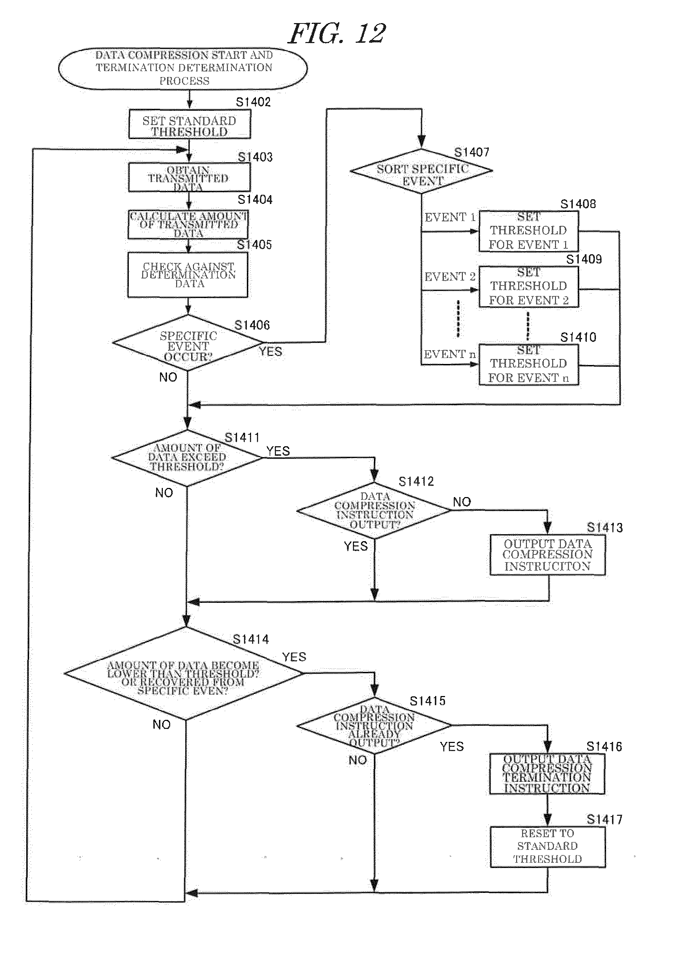

An explanation will be given of a determination process of the start and termination of data compression in such a case with reference to the flowchart of FIG. 12. As illustrated in FIG. 12, a standard threshold is initially set in the SC 216 (step S1402) such that the network load does not exceed the transmission capacity of the network 211 even when no transformer substation specific event occurs. Next, the SC 216 obtains data flowing through the network 211 (step S1403), and calculates the amount of transmitted data over the network 211 (step S1404).

Subsequently, the specific-event-occurrence detection unit 503 checks the received data against the determination data 502 stored in the determination database 501 (step S1405), and determines the presence/absence of the specific event data based on whether or not there is data to be determined as a specific event in the received data (step S1406). When the specific-event-occurrence detection unit 503 determines that there is no specific event data (step S1406: NO), the process progresses to step S1411.

When determining that there is the specific event data in the received data (step S1406: YES), the specific-event-occurrence detection unit 503 sorts the kind of the received specific event (step S1407), and sets the threshold of the amount of transmitted data corresponding to each event (steps S1408 to S1410). The specific-event-occurrence detection unit 503 checks whether or not the amount of transmitted data exceeds the set threshold (step S1411). Accordingly, the specific-event-occurrence detection unit 503 can determine the start and termination of the data compression in accordance with the kind of the transformer substation specific event, and thus the data transmission can be precisely carried out.

When the specific-event-occurrence detection unit 503 determines that the amount of transmitted data exceeds the set threshold (step S1411: YES), it is confirmed whether or not the data-compression-instruction output unit 504 has already output the compression instruction output (step S1412). When the data-compression-instruction output unit 504 has already output the compression instruction (step S1412: YES), the data-compression-instruction output unit 504 is made not to redundantly output the data compression instruction and the process progresses to step S1414. Conversely, when the data-compression-instruction output unit 504 has not output the compression instruction yet (step S1412: NO), the compression instruction output unit 504 outputs the data compression instruction (step S1413), and progresses the process' to the step S1414.

When the specific-event-occurrence detection unit 503 determines that the amount of transmitted data does not exceed the set threshold (the value set in the steps S1408 to S1410), the process also progresses to the step S1414. In the step S1414, the specific-event-recovery detection unit 505 detects the recovery from the specific event, or determines that the transmitted data amount becomes lower than the threshold set as the allowable capacity of the network or the transformer substation.

When the specific-event-recovery detection unit 505 detects the recovery from the specific event, or determines that the transmitted data amount becomes lower than the threshold (step S1414: YES), it is checked whether or not the data-compression-instruction output unit 504 has already output the data compression instruction (step S1415). When the data compression instruction output unit 504 has already output the data compression instruction (step S1415: YES), the data-compression-termination-instruction output unit 506 outputs the data compression termination instruction over the network 211 (step S1416), and then the SC 216 resets the threshold to the standard threshold again (step S1417), and the process returns to the data obtaining process over the transmission path (step S1403). Moreover, when the specific-event-recovery detection unit 505 does not detect the recovery from the specific event or does not determine that the transmitted data amount becomes lower than the threshold (step S1414: NO), and when the data-compression-instruction output unit 504 has not yet output the data compression instruction (step S1415: NO), the process returns to the data obtaining process over the transmission path (step S1403).

Furthermore, in the above-explained embodiments, with respect to the data transmission, the explanation was mainly given of the case from the MUs 1 to n and the IEDs 301 to 30n to the SC 216, but the necessary configuration may be implemented between the MUs 1 to n and between the IEDs 301 to 30n, or in the HMI 217 to likewise determine the start and end of the data compression between the HMI 217 and the SC 216, and to perform compression and extraction of the transmitted data. Moreover, any device among the control devices built in the transformer substation automation system may be caused to execute the determination process of the start and end of the data compression in accordance with the whole configuration of the transformer substation automation system, and the necessary performance and processing capacity, etc.

## Claims

1. A transformer substation automation system which couples, via a network, a plurality of control devices that obtain data from each portion of a transformer substation, and which causes the control devices to transmit the data to the network, the transformer substation automation system comprising:
a database that stores determination data for determining whether or not a specific event occurs in the transformer substation;
an event-occurrence detection unit that checks the data transmitted from the control devices via the network against the determination data stored in the database to detect an occurrence of the specific event;
a first output unit that outputs a data compression instruction for starting a compression of data to the whole transformer substation automation system via the network when the event-occurrence detection unit detects the occurrence of the specific event;
a recovery detection unit that checks the data transmitted from the control devices via the network against the determination data stored in the determination database to detect a recovery from the specific event;
a second output unit that outputs a termination instruction for terminating the compression of data to the whole transformer substation automation system via the network when the recovery detection unit detects the recovery from the specific event; and
a data compression unit which starts the compression of data when receiving the data compression instruction from the first output unit via the network, and which terminates the compression of data when receiving the termination instruction from the second output unit via the network.

2. The transformer substation automation system according to claim 1, wherein the data compression unit selectively compresses alternating waveform data indicating a system current and a system voltage at a time of a system failure.

3. The transformer substation automation system according to claim 1 or 2, further comprising a data extraction unit which starts an extraction of data when receiving the data compression instruction from the first output unit via the network, and which terminates the extraction of data when receiving the termination instruction from the second output unit via the network.

4. The transformer substation automation system according to claim 3, wherein the data extraction unit selectively extracts alternating waveform data indicating a system current and a system voltage at the time of a system failure.

5. The transformer substation automation system according to any one of claims 1-4, wherein
the control devices each comprises a merging unit that serves as an interface between each portion of the transformer substation and the transformer substation automation system, an intelligent terminal that exchanges data with the merging unit, and a station computer which exchanges data with the intelligent terminal and which serves as a core server of the transformer substation automation system, and
the database, the event-occurrence detection unit, and the recovery detection unit are built in the station computer.

6. The transformer substation automation system according to any one of claims 1-4, wherein
the control devices each comprises a merging unit that serves as an interface between each portion of the transformer substation and the transformer substation automation system, an intelligent terminal that exchanges data with the merging unit, and a station computer which exchanges data with the intelligent terminal and which serves as a core server of the transformer substation automation system, and
the database, the event-occurrence detection unit, and the recovery detection unit are built in at least one of the merging unit and the intelligent terminal.

7. The transformer substation automation system according to any one of claims 1-6, wherein the event-occurrence detection unit sets, for each kind of the specific event, a threshold of a data transmission amount for starting the compression of data.
